(19) **Europäisches Patentamt / European Patent Office / Office européen des brevets**

(11) **EP 4 075 459 A1**

(12) # EUROPEAN PATENT APPLICATION
published in accordance with Art. 153(4) EPC

(43) Date of publication:
**19.10.2022 Bulletin 2022/42**

(21) Application number: **20915589.4**

(22) Date of filing: **20.01.2020**

(51) International Patent Classification (IPC):
***H01F 27/28*** (2006.01)

(52) Cooperative Patent Classification (CPC):
**H01F 27/28**

(86) International application number:
**PCT/CN2020/073342**

(87) International publication number:
**WO 2021/146876 (29.07.2021 Gazette 2021/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **HU, Zhangrong**
**Shenzhen, Guangdong 518129 (CN)**
• **LIU, Xin**
**Shenzhen, Guangdong 518129 (CN)**
• **LIU, Ning**
**Shenzhen, Guangdong 518129 (CN)**
• **LIU, Tiejun**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **INDUCTOR, VOLTAGE CONVERSION CIRCUIT AND ELECTRONIC DEVICE**

(57)     Embodiments of this application provide an inductor, a voltage conversion circuit, and an electronic device, and relate to the field of electronic technologies. The inductor includes a magnetic core (X), and a first coil (L01) and a second coil (L02) that are wound around the magnetic core (X). The first coil (L01) and the second coil (L02) are connected in series between a first end and a second end of the inductor, and a pair of undotted terminals of the first coil (L01) and the second coil (L02) are coupled.

FIG. 9

EP 4 075 459 A1

## Description

## TECHNICAL FIELD

This application relates to the field of electronic technologies, and in particular, to an inductor, a voltage conversion circuit, and an electronic device.

## BACKGROUND

A switch-mode power supply is widely applied to power supply of chips in various electronic products, especially mobile devices such as mobile phones and notebook computers. This raises a high demand for miniaturization of a power supply and full-range efficiency improvement. Seventy percent (70%) of power consumption of a mobile phone is in a light-load state, for example, a standby mode scenario. In this case, a chip of the mobile phone requires a small power supply current. Therefore, power conversion efficiency in the light-load state determines power consumption of the mobile phone. When an application (application, APP) on the mobile phone is switched and runs, the chip needs to obtain a large current in a short time. Therefore, switching and running speeds of the APP depend on a dynamic response speed of the power supply. A high-end model has an increasingly higher requirement. In a buck (BUCK)/buck-boost (BUCK-BOOST) circuit, larger inductance of a power inductor indicates higher conversion efficiency of a power supply, but the poorer the dynamic response of the power supply, while smaller inductance indicates lower conversion efficiency of the power supply and better dynamic response. The conversion efficiency and the dynamic response of the power supply are indispensable, but requirements for selection of the power inductor are opposite. A common solution is to mount a plurality of inductors, and select inductors with different inductance values by using a circuit in the light-load state or a heavy-load state. However, a volume of the power inductor required by a plurality of the BUCK/BUCK-BOOST circuits is significantly increased. This seriously affects miniaturization of the power supply and is not conducive to a miniaturization design of the electronic product.

## SUMMARY

Embodiments of this application provide an inductor, a voltage conversion circuit, and an electronic device, to reduce a volume of an inductor.
To achieve the foregoing objectives, this application uses the following technical solutions.
According to a first aspect, an inductor is provided. The inductor includes a magnetic core and at least two coils wound around the magnetic core. The at least two coils are connected in series between a first end and a second end of the inductor, and a pair of undotted terminals of two adjacent coils are coupled. For example, the inductor includes a magnetic core, and a first coil and a second coil that are wound around the magnetic core. The first coil and the second coil are connected in series between a first end and a second end of the inductor, and a pair of undotted terminals of the first coil and the second coil are coupled. In this way, because the at least two coils are wound around a same magnetic core, and the pair of undotted terminals of the adjacent coils are coupled, the at least two coils share a magnetic loop and are tightly coupled or fully coupled, that is, magnetic flux generated by any coil on the magnetic core is superimposed with magnetic flux generated by another coil on the magnetic core, to increase total inductance of the inductor. In the conventional technology, at least one coil is wound around a respective magnetic core to form an independent inductor, when the independent inductors are connected in series, the total inductance is a sum of inductance of the inductors. Because the independent inductors each use an independent magnetic core, the magnetic flux on the magnetic core is not increased. However, in a solution provided in this application, because the coils are tightly coupled or fully coupled on the magnetic core, the magnetic flux on the magnetic core is increased, the generated total inductance is increased in comparison with the independent inductors that are connected in series. Therefore, equivalent total inductance generated when the independent inductors are connected in series in the conventional technology can be implemented with a smaller volume in the solution provided in this application. For example, a number of turns or a length of the coil may be fewer or shorter, to facilitate miniaturization of a power supply and a miniaturization design of an electronic product.

In an example implementation, the magnetic core is a columnar magnetic core, or is in a closed ring shape. For example, the magnetic core may be the columnar magnetic core. Generally, the magnetic core may be manufactured as an I-shape in a manufacturing process, and the coil is wound around a magnetic cylinder between an upper cover and a lower cover of the I-shaped magnetic core. Alternatively, the magnetic core may be a circular ring or a square ring. In this way, most or all of magnetic fields generated by the at least two coils pass through the magnetic core, and the at least two coils share the magnetic loop and are tightly coupled or fully coupled, that is, the magnetic flux generated by any coil on the magnetic core is superimposed with the magnetic flux generated by the another coil on the magnetic core, to increase the total inductance of the inductor.

In an example implementation, one or more of parameters of the at least two coils are different: inductance, impedance, a number of turns, or a cross-sectional area. For example, one or more of parameters of the first coil and the second coil are different: inductance, impedance, a number of turns, or a cross-sectional area. In this way, when the coils are applied to a voltage conversion circuit, coils with different parameters may be selected according to different conversion efficiency requirements. For example, if direct current resistance (directive current resistance, DCR) of the coil greatly affects conversion efficiency of the voltage conversion circuit, a thick coil with a larger cross-sectional area may be selected.

In an example implementation, the at least two coils are wound around the magnetic core in sequence, or the at least two coils are wound around the magnetic core at the same time. For example, the first coil is first wound around the magnetic core, and then the second coil is wound around the magnetic core. The second coil may cover the first coil, or may be directly wound around the magnetic core. Alternatively, the first coil and the second coil may be combined into one strand and wound around the magnetic core at the same time.

In an example implementation, the coils are a single-strand conductor, for example, a single-strand copper conductor; or the coils are a Litz wire. A skin effect can be better reduced when the Litz wire is used.

In an example implementation, the inductor is integrated with the coil by using a powdery magnetic core. The coils form a laminated structure having a strip conductor that is wound around the magnetic core, and a thickness direction of the laminated structure is parallel to a direction of a magnetic loop of the magnetic core.

According to a second aspect, a voltage conversion circuit is provided. The voltage conversion circuit includes a switch circuit and the inductor provided in the first aspect. The switch circuit and at least one coil on the inductor form a voltage conversion loop. The voltage conversion loop is coupled between a power supply and a load. The voltage conversion loop is configured to convert electric energy output by the power supply into predetermined power, and output the predetermined power to the load. In this solution, different switch circuits may be separately connected to one or more coils on the inductor to form different voltage loops, to supply power to different loads, so that the power can be supplied to the different loads in a light-load state, a heavy-load state, and other different working conditions. Because the at least two coils are wound around a same magnetic core, and a pair of undotted terminals of the adjacent coils are coupled, the at least two coils share a magnetic loop and are tightly coupled or fully coupled, that is, magnetic flux generated by any coil on the magnetic core is superimposed with magnetic flux generated by another coil on the magnetic core, to increase total inductance of the inductor. In the conventional technology, at least one coil is wound around a respective magnetic core to form an independent inductor, when the independent inductors are connected in series, the total inductance is a sum of inductance of each inductor. Because the independent inductors each use an independent magnetic core, the magnetic flux on the magnetic core is not increased. However, in a solution provided in this application, because the coils are tightly coupled or fully coupled on the magnetic core, the magnetic flux on the magnetic core is increased, the generated total inductance is increased in comparison with the independent inductors that are connected in series. Therefore, equivalent total inductance generated when the independent inductors are connected in series in the conventional technology can be implemented with a smaller volume in the solution provided in this application, to facilitate miniaturization of the power supply and a miniaturization design of an electronic product.

In an example implementation, to implement a buck function of the voltage conversion circuit, the switch circuit is coupled between a first end of the inductor and the power supply, and a second end of the inductor is coupled to the load. Alternatively, the switch circuit is coupled between undotted terminals of any two adjacent coils and the power supply, and the second end of the inductor is coupled to the load.

In an example implementation, to implement a boost function of the voltage conversion circuit, the second end of the inductor is coupled to the load by using the switch circuit, and the first end of the inductor is coupled to the power supply. Alternatively, the switch circuit is coupled between the undotted terminals of any two adjacent coils and the load, and the first end of the inductor is coupled to the power supply.

In an example implementation, the switch circuit includes a half-bridge circuit. In addition, when being used as a switch circuit with a boost function, a switch transistor of an upper bridge arm in the half-bridge circuit may be replaced with a diode. When being used as a switch circuit with a buck function, a switch transistor of a lower bridge arm in the half-bridge circuit may be replaced with a diode. When the upper bridge arm and the lower bridge arm use the switch transistor, higher efficiency can be implemented.

According to a third aspect, an electronic device is provided. The electronic device includes the voltage conversion circuit provided in the second aspect and a control circuit. The control circuit is configured to control a switch circuit.

For a technical problem resolved by the solution provided in the third aspect and an implemented technical effect, refer to the descriptions in the first aspect and the second aspect. Details are not described again.

**BRIEF DESCRIPTION OF DRAWINGS**

FIG. 1 is a schematic diagram of a structure of an electronic device according to an embodiment of this application;
FIG. 2 is a schematic diagram of a structure of a BUCK circuit according to an embodiment of this application;
FIG. 3 is a schematic diagram of a structure of a BUCK circuit according to another embodiment of this application;
FIG. 3a is a schematic diagram of a structure of a BUCK circuit according to still another embodiment

FIG. 3b is a schematic diagram of a structure of a BUCK circuit according to yet another embodiment of this application;

FIG. 3c is a schematic diagram of a structure of a BUCK circuit according to another embodiment of this application;

FIG. 4 is a schematic diagram of a structure of a BOOST circuit according to an embodiment of this application;

FIG. 5 is a schematic diagram of a structure of a BOOST circuit according to another embodiment of this application;

FIG. 6 is a schematic diagram of a structure of a control circuit of a switch circuit according to an embodiment of this application;

FIG. 7 is a schematic diagram of a structure of a voltage conversion circuit according to an embodiment of this application;

FIG. 8 is a schematic diagram of a structure of a voltage conversion circuit according to another embodiment of this application;

FIG. 9 is a schematic diagram of a structure of an inductor according to an embodiment of this application;

FIG. 10 is a schematic diagram of a structure of an inductor according to another embodiment of this application;

FIG. 11 is a schematic diagram of a structure of an inductor according to still another embodiment of this application;

FIG. 12 is a schematic diagram of a structure of an inductor according to yet another embodiment of this application;

FIG. 13 is a schematic diagram of a structure of an inductor according to another embodiment of this application;

FIG. 14 is a schematic diagram of a structure of an inductor according to still another embodiment of this application;

FIG. 15 is a schematic diagram of a structure of an inductor according to yet another embodiment of this application;

FIG. 16 is a schematic diagram of a structure of an inductor according to another embodiment of this application;

FIG. 17 is a schematic diagram of a structure of a voltage conversion circuit according to still another embodiment of this application;

FIG. 18 is a schematic diagram of a structure of a voltage conversion circuit according to yet another embodiment of this application;

FIG. 19 is a schematic diagram of a structure of an inductor according to still another embodiment of this application;

FIG. 20 is a schematic diagram of a structure of a voltage conversion circuit according to another embodiment of this application;

FIG. 21 is a schematic diagram of a structure of a voltage conversion circuit according to still another embodiment of this application; and

FIG. 22 is a schematic diagram of a structure of a voltage conversion circuit according to yet another embodiment of this application.

## DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The following terms "first" and "second" are merely intended for a purpose of description, and shall not be understood as an indication or implication of relative importance or implicit indication of a quantity of indicated technical features. Therefore, a feature limited by "first", "second", or the like may explicitly or implicitly include one or more features.

In addition, in this application, position terms such as "top" and "bottom" are defined relative to positions of components in the accompanying drawings. It should be understood that these position terms are relative concepts used for relative description and clarification, and may correspondingly change based on changes in the positions of the components in the accompanying drawings.

In this application, it should be noted that the term "connection" should be understood in a broad sense unless otherwise expressly specified and limited. For example, the "connection" may be a fixed connection, may be a detachable connection, may be an integral connection; may be a direct connection, or may be an indirect connection implemented by using a medium. In addition, the term "coupling" may be a manner of implementing an electrical connection for signal transmission. The "coupling" may be a direct electrical connection, or may be an indirect electrical connection by using an intermediate medium.

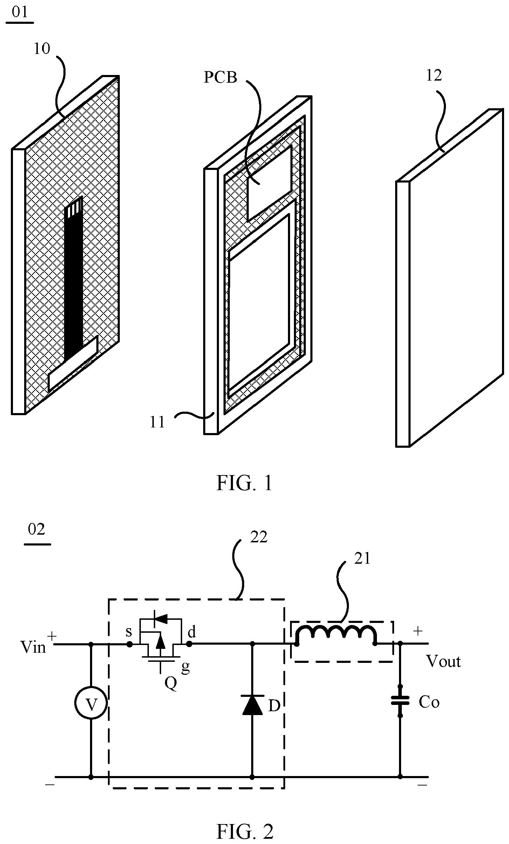

Embodiments of this application provides an electronic device. The electronic device includes, for example, a mobile phone, a tablet computer, a vehicle-mounted computer, and a smart wearable product. A specific form of the electronic device is not particularly limited in this embodiment of this application. For ease of description, the following uses an example in which the electronic device is the mobile phone for description. Refer to FIG. 1. An electronic device 01 includes a display module 10, a middle frame 11, and a rear cover 12.

The display module 10 is configured to display an image. In some embodiments of this application, the display module 10 includes a liquid crystal display (liquid crystal display, LCD) module and a back light unit (back light unit, BLU). Alternatively, in some other embodiments of this application, the display module 10 may be an organic light emitting diode (organic light emitting diode, OLED) display screen.

The middle frame 11 is located between the display module 10 and the rear cover 12, and a side of the middle frame 11 facing the display module 10 is configured to carry the display module 10. In addition, the electronic device 01 further includes a printed circuit board (printed circuit board, PCB). A surface of a side of the middle frame 11 facing the rear cover 12 is configured to carry an electronic device such as a PCB, a camera, and a battery. The camera and the battery are not shown in the figure. The rear cover 12 is connected to the middle frame 11 to form an accommodation cavity configured to accommodate the electronic device such as the PCB, the camera, and the battery. This can avoid ingress of water vapor and dust into the accommodation cavity, thereby affecting performance of the electronic device.

In addition, the electronic device 01 further includes a voltage conversion circuit (or referred to as a switch-mode power supply) and a control circuit. The voltage conversion circuit and the control circuit are disposed on the PCB, and the control circuit is configured to control a switch circuit. The voltage conversion circuit is coupled between a power supply (the battery) and some loads (chips) on the PCB. For example, the voltage conversion circuit is coupled between the battery and the following chips: a system on chip (system on chip, SoC), a central processing unit (central processing unit, CPU), or a graphics processing unit (graphics processing unit, GPU). The voltage conversion circuit is configured to convert a voltage of the battery, for example, after the voltage is bucked or boosted, the voltage is provided for the chips as a working voltage. The voltage conversion circuit may be a buck (BUCK) circuit, a boost (BOOST) circuit, or a BUCK-BOOST circuit.

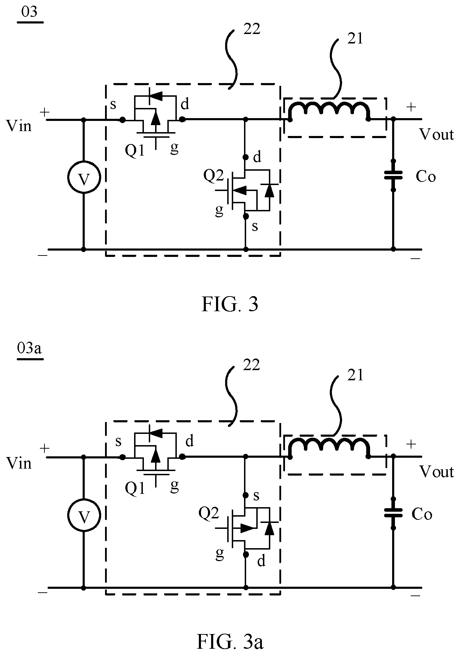

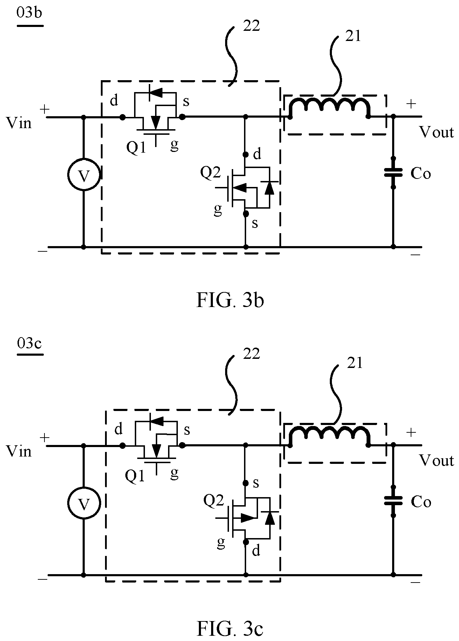

The voltage conversion circuit includes the switch circuit and an inductor. Refer to FIG. 2. A BUCK circuit 02 includes an inductor 21, a switch circuit 22 (including a switch transistor Q and a diode D), and a capacitor Co. The switch transistor Q may be a transistor. A first electrode of the switch transistor Q, for example, a source (source, s) is coupled to an input end Vin of the BUCK circuit 02, and the input end Vin of the BUCK circuit 02 is coupled to a power supply, for example, an anode of the battery. A second electrode of the switch transistor Q, for example, a drain (drain, d), is coupled to a first end of the inductor 21. A second end of the inductor 21 is coupled to an output end Vout of the BUCK circuit 02. A gate (gate, g) of the switch transistor Q is configured to receive a control signal sent by a control circuit. The switch transistor Q is conducted or cut off through the control signal. In addition, a cathode (cathode, c) of the diode D is coupled to the first end of the inductor 21, and an anode (anode, a) is coupled to the power supply, for example, a cathode of the battery. A first end of the capacitor Co is coupled to the output end Vout of the BUCK circuit 02, and a second end of the capacitor Co is coupled to the power supply, for example, the cathode of the battery. The inductor 21 has functions of energy storage and filtering. When the switch transistor Q is conducted, the power supply charges the inductor 21. When the switch transistor Q is cut off, the inductor 21 discharges, and continuously supplies a stable working voltage to each chip through the capacitor Co. To improve efficiency of the power supply, the diode D in the BUCK circuit 02 may be usually replaced with the switch transistor. In this way, the switch circuit may be replaced with a half-bridge circuit. The foregoing solution in FIG. 2 uses an example in which the switch transistor Q uses a PMOS (positive channel metal oxide semiconductor, P-type metal-oxide-semiconductor field-effect transistor). Certainly, the switch transistor Q may also use an NMOS (negative-MOS, N-type metal-oxide-semiconductor field-effect transistor). The difference lies in that when the switch transistor Q uses the NMOS, the drain d of the switch transistor Q is coupled to the input end Vin of the BUCK circuit 02, and the source s of the switch transistor Q is coupled to the first end of the inductor 21. FIG. 3 shows a BUCK circuit 03. A difference from FIG. 2 is that the diode D in the BUCK circuit 02 shown in FIG. 2 is replaced with the switch transistor. The BUCK circuit 03 includes a half-bridge circuit formed by connecting a switch transistor Q1 to a switch transistor Q2 in series. An upper bridge arm of the half-bridge circuit is the switch transistor Q1 (a source of Q1 is coupled to Vin, and a drain of Q1 is coupled to a drain of the switch transistor Q2). A lower bridge arm is the switch transistor Q2 (a source of Q2 is coupled to the power supply, for example, the cathode of the battery), and the inductor 21 is connected in series between an intermediate node (a connection point between the drain d of Q1 and the drain d of Q2) of the half-bridge circuit and an output end Vout of the BUCK circuit 03. The control circuit inputs a first control signal to a gate g of Q1, and the control circuit inputs a second control signal to a gate g of Q2. The first control signal is used to conduct or cut off the switch transistor Q1, and the second control signal is used to conduct or cut off the switch transistor Q2. When the switch transistor Q1 is conducted, the power supply charges the inductor 21. When the switch transistor Q1 is cut off and Q2 is conducted, the inductor 21 discharges, and continuously supplies the stable working voltage to each chip through the capacitor Co. The solution provided in FIG. 3 uses an example in which the switch transistor Q1 uses the PMOS and the switch transistor Q2 uses the NMOS. Certainly, in another solution, the switch transistors Q1 and Q2 may use the PMOS or the NMOS, or the switch transistor Q1 may use the NMOS and the switch transistor Q2 may use the PMOS. FIG. 3a shows a BUCK circuit 03a. Q1 uses the PMOS, and Q2 uses the PMOS. The difference from FIG. 3 lies in that: In FIG. 3a, the source s of Q2 is coupled to the drain d of Q1, and the drain d of Q2 is coupled to the power supply, for example, the cathode of the battery. FIG. 3b shows a BUCK circuit 03b. Q1 uses the NMOS, and Q2 uses the NMOS. The difference from FIG. 3 lies in that: In FIG. 3b, the drain d of Q1 is coupled to an input end Vin of the BUCK circuit 03b, and the source s of Q1 is coupled to the first end of the inductor 21. FIG. 3c shows a BUCK circuit 03c. Q1 uses the NMOS, and Q2 uses the PMOS. The difference from FIG. 3 lies in that: In FIG. 3c, the drain d of Q1 is coupled to an input end Vin of the BUCK circuit 03b, and the source s of Q1 is coupled to the first end of the inductor 21. The source s of Q2 is coupled to the source s of Q1, and the drain d of Q2 is coupled to the power supply, for example, the cathode of the battery. However, when the PMOS is used as the upper bridge arm, the source s is directly connected to Vin, and a voltage of the source s is fixed, the PMOS can be conducted for use when a voltage of the gate g is lower than that of the source s. When the NMOS is used as the lower bridge arm, and the source s is directly connected to the cathode (a fixed value) of the battery, and the NMOS can be conducted when the voltage of the gate g is higher than that of the source s, for example, the NMOS can be conducted when a voltage of Vin is fixed. A circuit design is simple. When another manner is used, for example, the upper bridge arm uses the NMOS, the drain d is connected to Vin, and the voltage of the source s is not fixed, the voltage of the gate g that controls conduction of the NMOS cannot be determined, because there are two states of the voltage of the source s to ground: When the MOS transistor is cut off, the voltage is at a low level; and when the MOS transistor is conducted, the voltage is close to a high level of Vin. Therefore, when the NMOS is used as the upper bridge arm, an isolated power supply controller or a bootstrap boost circuit needs to be designed separately. Similarly, if the PMOS is used as the lower bridge arm, the drain d is connected to the cathode of the battery, and the voltage of the source s is not fixed (low level or Vin), the voltage of the gate g cannot be determined. In this case, the isolated power supply controller or the bootstrap boost circuit needs to be designed separately.

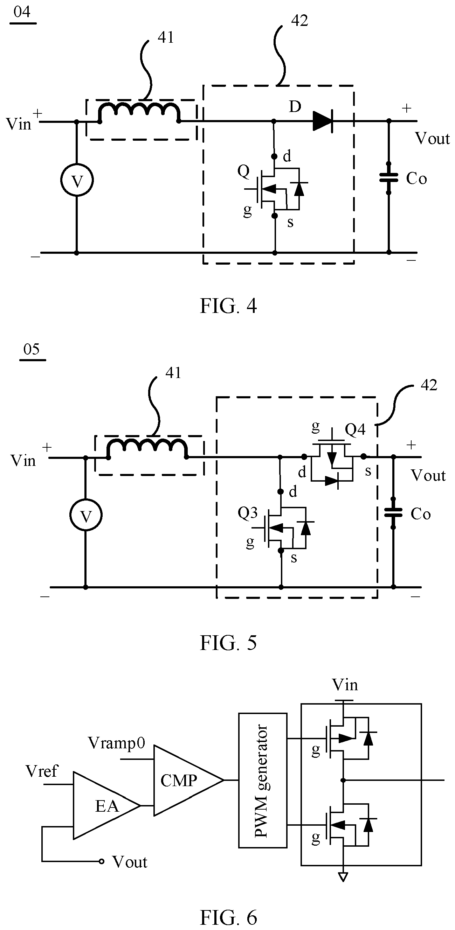

FIG. 4 shows a BOOST circuit 04 including an inductor 41, a switch circuit 42 (including a switch transistor Q and a diode D), and a capacitor Co. The switch transistor Q may be a transistor. A first end of the inductor 41 is coupled to an input end Vin of the BOOST circuit 04, and the input end Vin of the BOOST circuit 04 is coupled to a power supply, for example, an anode of a battery. A first electrode of the switch transistor Q, for example, a drain (drain, d), is coupled to a second end of the inductor 41. A second electrode of the switch transistor Q, for example, a source (s), is coupled to the power supply, for example, a cathode of the battery. A gate (gate, g) of the switch transistor Q is configured to receive a control signal sent by a control circuit. The switch transistor Q is conducted or cut off through the control signal. In addition, an anode (anode, a) of the diode D is coupled to the second end of the inductor 41, and a cathode (cathode, c) is coupled to an output end Vout of the BOOST circuit 04. The inductor 41 has functions of energy storage and filtering. When the switch transistor Q is conducted, the inductor 41 is charged. When the switch transistor Q is cut off, the inductor 41 and the power supply are connected in series to discharge (because the inductor 41 is connected in series to the power supply, the voltage is increased, and a BOOST function is enabled), and continuously supply a stable working voltage to each chip through the capacitor Co. To improve efficiency of the power supply, the diode D in the BOOST circuit 04 may be usually replaced with the switch transistor. In this way, the switch circuit may be replaced with a half-bridge circuit. The foregoing solution in FIG. 4 uses an example in which the switch transistor Q uses an NMOS. Certainly, the switch transistor Q may also use a PMOS. The difference lies in that: When the switch transistor Q uses the PMOS, the source of the switch transistor Q is coupled to the second end of the inductor 41, and the drain d of the switch transistor Q is coupled to the power supply, for example, the cathode of the foregoing battery. FIG. 5 shows a BOOST circuit 05. A difference from FIG. 5 is that the diode D in the BOOST circuit 04 provided in FIG. 4 is replaced with the switch transistor. The BOOST circuit 05 includes a bridge circuit formed by connecting a switch transistor Q3 to a switch transistor Q4 in series. An upper bridge arm of the half-bridge circuit uses the switch transistor Q4 (a source s of Q4 is coupled to Vout of the BOOST circuit 04, and a drain d of Q4 is coupled to a drain d of the switch transistor Q3). A lower bridge arm uses the switch transistor Q3 (a source s of Q3 is coupled to a power supply, for example, the cathode of the foregoing battery). The inductor 41 is connected in series between an intermediate node (a connection point between the drain d of Q4 and the drain d of the Q3) of the bridge circuit and an input end Vin of the BOOST circuit 05. A third control signal is input to a gate g of Q3, a fourth control signal is input to a gate g of Q4, the switch transistor Q3 is conducted and cut off through the third control signal, and the switch transistor Q4 is conducted and cut off through the fourth control signal. When the switch transistor Q3 is conducted, the inductor 41 is charged. When the switch transistor Q3 is cut off and Q4 is conducted, the inductor 41 is connected in series to the power supply to discharge, and continuously supply the stable working voltage to each chip through the capacitor Co. The solution provided in FIG. 5 uses an example in which the switch transistor Q3 uses the NMOS and the switch transistor Q4 uses the NMOS. Certainly, in another solution, the switch transistors Q3 and Q4 may use the PMOS or the NMOS, or the switch transistor Q3 may use the NMOS and the switch transistor Q4 may use the PMOS. A principle thereof is similar to that of the bridge in the BUCK circuit provided in FIG. 3. Details are not described again.

In the following solutions, the mentioned switch circuit may use at least any form of the switch circuit mentioned in the foregoing examples. The control signal may be a PWM signal generated by a pulse width modulation (pulse width modulation, PWM) generator. The following uses a BUCK circuit as an example. A control signal is usually generated by the PWM generator. FIG. 6 shows a control circuit of a switch circuit. An output end of the PWM generator is connected to a gate g of a switch transistor in the switch circuit. An input end of the PWM generator is connected to an output end of a comparator (comparator, CMP). A ramp voltage Vramp0 is input to a first input end of the CMP, and VrampO is a ramp voltage of an expected working frequency. A second input end of the CPM is connected to an error amplifier (error amplifier, EA). A reference voltage Vref is input to a positive input end of the error amplifier, and a reverse input end of EA is connected to an output end Vout of a voltage conversion circuit. Vref is an output voltage value expected by the output end Vout. When an output voltage of the output end Vout of the voltage conversion circuit is less than Vref, EA generates a positive bias voltage output, resulting that a voltage value of the second input end of the CMP is changed (increase or decrease is related to a positive wiring and a negative wiring of the CMP). The CMP generates, based on the bias voltage and Vramp0, a control signal having the same frequency as Vramp0, and outputs the control signal to the PWM generator, so that the output voltage is increased until it reaches an expected voltage. When the output voltage of the output end Vout of the voltage conversion circuit is greater than Vref, the CMP controls the PWM generator, so that conduction time (a duty cycle decreases) of an upper bridge arm of a bridge in the switch circuit is controlled to be reduced through the generated PWM signal, and the output voltage is reduced to the expected voltage.

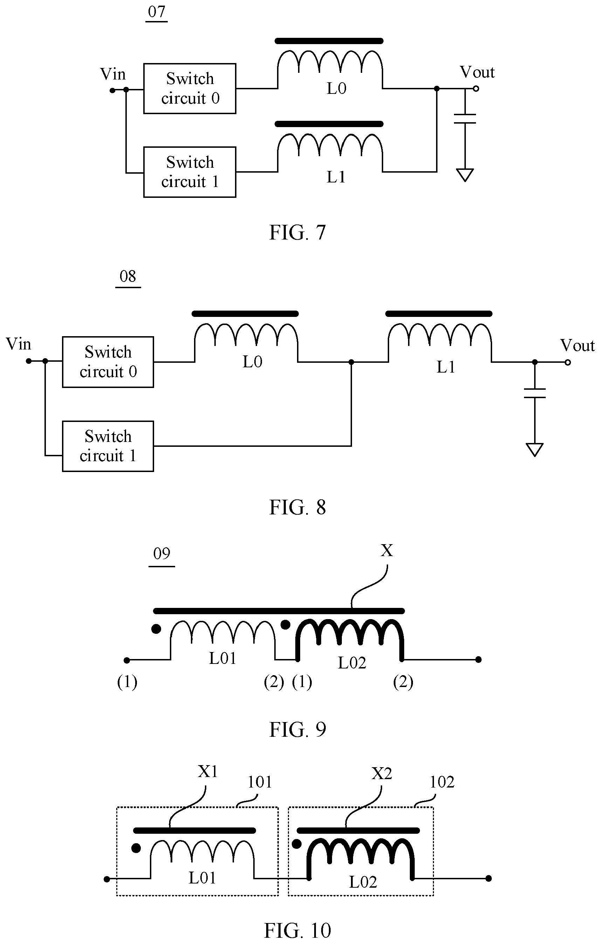

Generally, in the conventional technology, to balance conversion efficiency of the voltage conversion circuit and a dynamic response, a plurality of inductors are usually installed. In a light-load state and a heavy-load state, inductors with different inductance values are selected by using a circuit. The following uses an example in which the BUCK circuit is used as the voltage conversion circuit. Refer to FIG. 7. There are two switch circuits (switch circuits 0 and 1) and two inductors (L0 and L1) between an input end Vin and an output end Vout of a BUCK circuit 07. The switch circuit 0 is coupled to a load by using the inductor L0 (coupled to the load by using a port Vout), and the switch circuit 1 is coupled to the load by using the inductor L1. In a light-load state, the switch circuit 0 works, and the large inductor L0 is used, to obtain high conversion efficiency. In a heavy-load state, the switch circuit 1 works, and the small inductor L1 is used, to ensure good transient performance. In addition, a direct current resistance (directive current resistance, DCR) of the small inductor is small, and conversion efficiency is higher. In another example, refer to FIG. 8. There are two switch circuits (switch circuits 0 and 1) and two inductors (L0 and L1) between an input end Vin and an output end Vout of a BUCK circuit 08. The inductors L0 and L1 are connected in series. The switch circuit 0 is coupled to the load by using the inductors L0 and L1 (coupled to the load by using the port Vout), and the switch circuit 1 is coupled to the load by using the inductor L1. In the light-load state, the switch circuit 0 works, and equivalent inductance used in this case is inductance of L0+L1 (large inductance), so that the conversion efficiency can be ensured. In the heavy-load state, the switch circuit 1 works, and equivalent inductance used in this case is inductance of L1 (small inductance), so that better transient performance and the conversion efficiency in the heavy-load state can be obtained. In the foregoing two examples, two independent inductors L0 and L1 need to be used. Therefore, occupied space in a board is doubled, and miniaturization of a power supply is affected, which is unfavorable to a miniaturization design of an electronic product.

To resolve the foregoing problem, an embodiment of this application provides an inductor, including a magnetic core and at least two coils wound around the magnetic core. The at least two coils are connected in series between a first end and a second end of the inductor, and a pair of undotted terminals of two adjacent coils are coupled. For example, the inductor includes a magnetic core, and a first coil and a second coil that are wound around the magnetic core. The first coil and the second coil are connected in series between a first end and a second end of the inductor, and a pair of undotted terminals of the first coil and the second coil are coupled. In this way, because the at least two coils are wound around a same magnetic core, and the pair of undotted terminals of the adjacent coils are coupled, the at least two coils share a magnetic loop and are tightly coupled or fully coupled, that is, magnetic flux generated by any coil on the magnetic core is superimposed with magnetic flux generated by another coil on the magnetic core, to increase total inductance of the inductor. In the conventional technology, the at least one coil is wound around a respective magnetic core to form an independent inductor, when the independent inductors are connected in series, the total inductance is a sum of inductance of each inductor. Because the independent inductors each use an independent magnetic core, the magnetic flux on the magnetic core is not increased. However, in a solution provided in this application, because the coils are tightly coupled or fully coupled on the magnetic core, the magnetic flux on the magnetic core is increased, the generated total inductance is increased in comparison with the independent inductors that are connected in series. Therefore, equivalent total inductance generated when the independent inductors are connected in series in the conventional technology can be implemented with a smaller volume in the solution provided in this application. For example, number of turns or a length of the coil may be fewer or shorter, to facilitate miniaturization of the power supply and a miniaturization design of an electronic product.

The following uses the solution in FIG. 9 as an example. The inductor 09 includes two coils L01 and L02 and a magnetic core X. The coils L01 and L02 are wound around the magnetic core X. A first end (1) of L01 is used as a first end of the inductor, a second end (2) of L01 is coupled to a first end (1) of L02, and a second end (2) of L02 is used as a second end of the inductor. The first end (1) of L01 and the second end (2) of L02 are a pair of undotted terminals, and the second end (2) of L01 and the first end (1) of L02 are a pair of undotted terminals. Because L01 and L02 are wound around the same magnetic core, L01 and L02 share a magnetic loop and are coupled, and a serial equivalent inductance value is:

$$l_{eq1} = l01 + l02 + 2k\sqrt{l01*l02}\ .$$

$l_{eq1}$ represents equivalent inductance of the inductor 09, $l01$ represents equivalent inductance of the coil L01, $l02$ represents equivalent inductance of the coil L02, and $k$ represents a coupling coefficient. When $k = 1$, it represents full coupling; when $k$ is close to 1, it represents tight coupling; and when $k$ is small, it represents loose coupling.

FIG. 10 uses an example in which two independent tapped inductors are connected in series in the conventional technology. Because the tapped inductors are not coupled, a coil L01 of the inductor 101 and a coil L02 of the inductor 102 are connected in series. When inductance of the two inductors in FIG. 10 is respectively the same as that of the two coils in FIG. 9 (that is, the inductance generated by the coil L01 of the inductor 101 shown in FIG. 10 is $l01$, and the inductance generated by the coil L02 of the inductor 102 is $l02$). Because a magnetic core X1 and a magnetic core X2 are not coupled, after the two inductors in FIG. 10 are connected in series, equivalent inductance is:

$$l_{eq2} = l01 + l02$$
. Obviously, $l_{eq2} \le l_{eq1}$ .

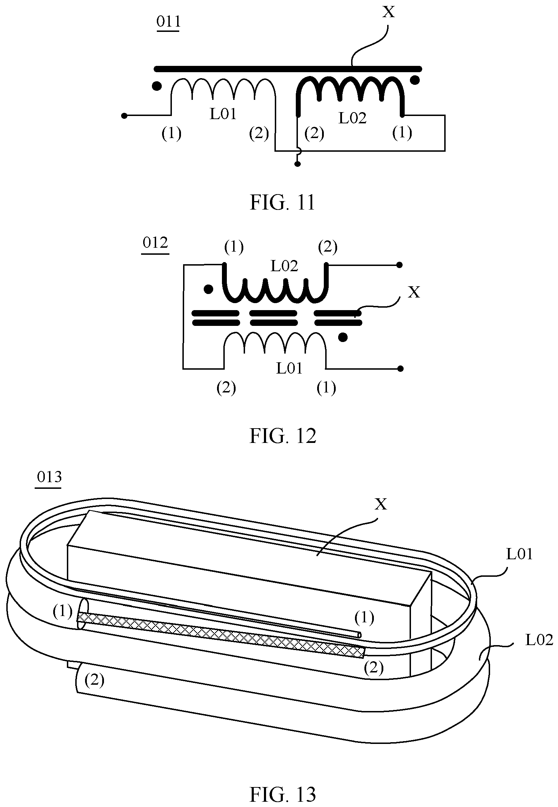

It can be learned that when sizes and windings are the same, using a tight coupling manner allows the equivalent inductance to be doubled. Based on a relationship between inductance, a coil length, and a number of turns, same equivalent inductance can be achieved through fewer number of turns or a shorter length by using inductive coils provided in this application. Therefore, the same equivalent inductance may be implemented with a smaller volume. In addition, for the inductor 09 shown in FIG. 9, when the second end (2) of L01 is directly coupled to the first end (1) of L02 inside the inductor, compared with an external connection of the tapped inductor, shorter traces may be implemented. Therefore, DCR is smaller. Certainly, the winding manner of L01 and L02 in FIG. 9 is described by using an example in which L01 and L02 are wound in a same direction. In this way, a pair of undotted terminals of L01 and L02 are located between another pair of undotted terminals, so that the second end (2) of L01 and the first end (1) of L02 may be directly coupled inside the inductor. If L01 and L02 are wound in an opposite direction as shown in FIG. 11, the undotted terminals of L01 and L02 are far away from each other, but may be connected in series in an external coupling manner. FIG. 11 shows an inductor 011. A second end (2) of a coil L01 of the inductor 011 may be coupled to the first end (1) of L02 by using an external lead. In another implementation, undotted terminals of negative coupled inductors that are connected in parallel may alternatively be externally coupled. Refer to FIG. 12. An inductor 012 includes coils L01 and L02 wound around the magnetic core X. L01 and L02 are wound in an opposite direction (that is, as shown in FIG. 12, undotted terminals of L01 and L02 are located on a same side, that is, the second end (2) of L01 and the first end (1) of L02 are located on a same side, and the first end (1) of L01 and the second end (2) of L02 are located on a same side). In this implementation, the second end (2) of L01 may be coupled to the first end (1) of L02 by using an external lead.

A shape of the magnetic core used by the inductor is not limited in this application. For example, the magnetic core may be a columnar magnetic core, but it may be usually manufactured in an I-shaped shape in a manufacturing process. The coil is wound around a magnetic cylinder between an upper cover and a lower cover of the I-shaped magnetic core. Alternatively, the magnetic core may be in a closed ring shape, for example, may be a circular ring shape or a square ring shape. In this way, most or all of magnetic fields generated by the at least two coils pass through the magnetic core, and the at least two coils share the magnetic loop and are tightly coupled or fully coupled, that is, magnetic flux generated by any coil on the magnetic core is superimposed with magnetic flux generated by another coil on the magnetic core, to increase the total inductance of the inductor. Parameters of the coils may be different based on actual load power requirements. For example, parameters of each coil, such as inductance, impedance, a number of turns, and a cross-sectional area may be different. In this way, when the coils are applied to the voltage conversion circuit, the coils with different parameters may be selected according to different conversion efficiency requirements. For example, if DCR of the coil greatly affects the conversion efficiency of the voltage conversion circuit, a thick coil with larger cross-sectional area may be selected.

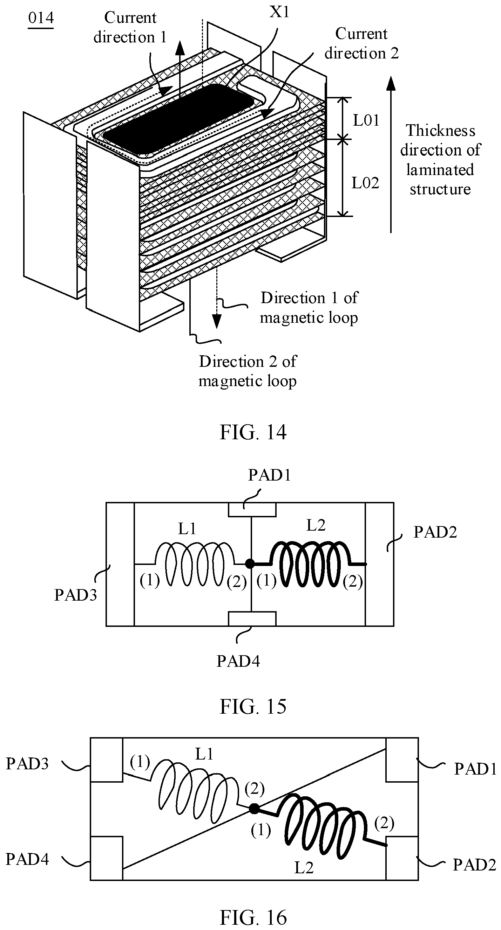

The coils may be a single-strand conductor, for example, a single-strand copper conductor; or the coils may be a Litz wire to reduce a skin effect. The coils may be wound in sequence or at the same time. FIG. 13 is a schematic diagram of a structure of an inductor 013. Coils L01 and L02 are sequentially wound around the magnetic core X, and the second end (2) of L01 is coupled to the first end (1) of L02. In an example shown in FIG. 13, the coil L01 is wound around an upper portion of the magnetic core X, and the coil L02 is wound around a lower portion of the magnetic core. Alternatively, the coil L01 may be wound around an external part of L02, L02 may be wound around an external part of L01, or L01 and L02 may be directly wound around the magnetic core. Alternatively, the coils L01 and L02 are wound around the magnetic core X at the same time. For example, L01 and L02 are twisted into one strand and wound around the magnetic core at the same time. It should be noted that when L01 and L02 are twisted into one strand, L01 and L02 are only physically twisted, but not electrically connected. For example, when L01 and L02 are twisted by using an enamelled wire, although the two coils are close to each other, an electrical connection relationship still refers to the mentioned coupling through a pair of undotted terminals. In addition, the inductor may be integrated with the coils by using a powdery magnetic core. For example, the coils form a laminated structure having a strip conductor that is wound around the magnetic core, and a thickness direction of the laminated structure is parallel to a direction of the magnetic loop of the magnetic core. Refer to FIG. 14. An inductor 014 may be formed with copper clad steel sheet coils. Thicknesses of copper sheets of coils L01 and L02 may be different, and stacking spacings may also be different. FIG. 14 shows a thickness direction of the laminated structure of the copper sheets. The thickness direction is the same as that of the magnetic loop of the magnetic core (according to a right-hand rule, when directions of currents in the coils of the inductor are different, there may be a direction 1 of the magnetic loop (corresponding to a current direction 1) or a direction 2 of the magnetic loop (corresponding to a current direction 2) FIG. 15 and FIG. 16 are schematic diagrams of a pin process of the inductor. A packaged inductor component may be provided with a three-terminal or a four-terminal interface. Refer to FIG. 15 and FIG. 16. The second end (2) of L01 is coupled to the first end (1) of L02, to provide an interface (PAD1 or PAD4, or only one of the two) for an external component. The first end (1) of L01 provides an interface PAD3 for the external component, and the second end (2) of L02 provides an interface PAD2 for the external component.

Certainly, the foregoing mainly uses an example in which the two coils are connected in series. In another example, the inductor provided in this embodiment of this application may alternatively include more coils connected in series.

When the inductor provided in this embodiment of this application is applied to the voltage conversion circuit, the voltage conversion circuit includes a switch circuit and the inductor. The switch circuit and at least one coil on the inductor form a voltage conversion loop, and the voltage conversion loop is coupled between a power supply and a load. The voltage conversion loop is configured to convert electric energy output by the power supply into predetermined power, and output the predetermined power to the load.

In this solution, different switch circuits may be separately connected to one or more coils on the inductor to form different voltage loops, to supply power to different loads, so that the power can be supplied to different loads in a light-load state, a heavy-load state, and other different working conditions. Because the at least two coils are wound around a same magnetic core, and a pair of undotted terminals of the adjacent coils are coupled, the at least two coils share the magnetic loop and are tightly coupled or fully coupled, that is, the magnetic flux generated by any coil on the magnetic core is superimposed with the magnetic flux generated by another coil on the magnetic core, to increase total inductance of the inductor. In the conventional technology, the at least one coil is wound around a respective magnetic core to form an independent inductor, when the independent inductors are connected in series, the total inductance is a sum of inductance of each inductor. Because the independent inductors each use an independent magnetic core, the magnetic flux on the magnetic core is not increased. However, in a solution provided in this application, because the coils are tightly coupled or fully coupled on the magnetic core, the magnetic flux on the magnetic core is increased, the generated total inductance is increased in comparison with the independent inductors that are connected in series. Therefore, equivalent total inductance generated when the independent inductors are connected in series in the conventional technology can be implemented with the smaller volume in the solution provided in this application, to facilitate miniaturization of a power supply and a miniaturization design of an electronic product.

The switch circuit and the inductor may form the voltage conversion loop having a buck (BUCK) function, a boost (BOOST) function, or a buck-boost (BUCK-BOOST) function.

With reference to the description of the BUCK circuit and the BOOST circuit in FIG. 2, FIG. 3, FIG. 4, and FIG. 5, when the buck function of the loop is enabled, the switch circuit is coupled between the first end of the inductor and the power supply, and the second end of the inductor is coupled to the load. Alternatively, the switch circuit is coupled between the undotted terminals of any two adjacent coils and the power supply, and the second end of the inductor is coupled to the load. When the boost function of the loop is enabled, the second end of the inductor is coupled to the load by using any switch circuit, and the first end of the inductor is coupled to the power supply. Alternatively, the switch circuit is coupled between the undotted terminals of any two adjacent coils and the load, and the first end of the inductor is coupled to the power supply.

The following uses a specific example in which the inductor is used in the voltage conversion circuit.

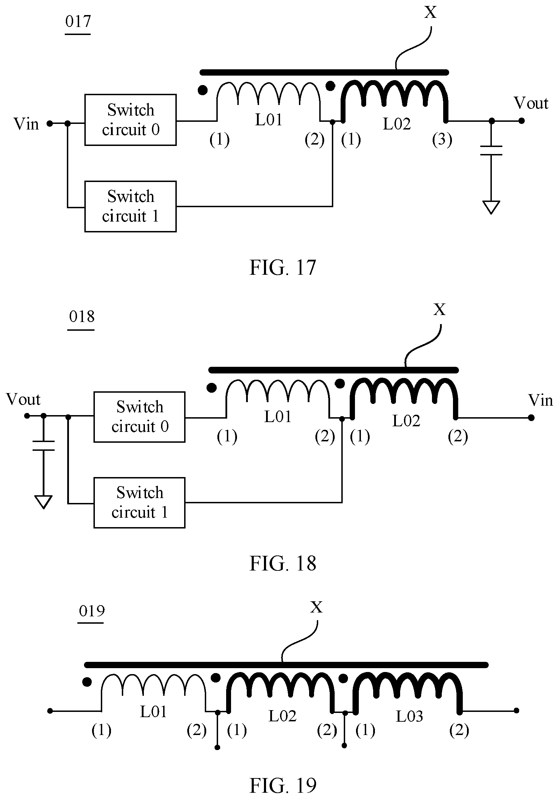

An inductor formed by two coils connected in series (that is, the inductor shown in FIG. 9) is used as an example for description. Example 1 shows a BUCK circuit. Refer to FIG. 17. A BUCK circuit 017 includes the switch circuit 0 and the switch circuit 1. The switch circuit 0 is coupled between a first end (that is, a first end (1) of a coil L01) of the inductor and the power supply (that is, Vin). The switch circuit 1 is coupled between undotted terminals of coils L01 and L02 (that is, a connection point between a second end (2) of L01 and a first end (1) of L02) and the power supply. A second end (2) of L02 is connected to the load by using the port Vout. Therefore, when the BUCK circuit 017 works in the light-load state, the switch circuit 0 works, and equivalent inductance connected to the BUCK circuit 017 is:

$$l_{eq1} = l01 + l02 + 2k\sqrt{l01 * l02}$$ .

$l_{eql}$ equivalent inductance of the inductor, $l01$ represents equivalent inductance of the coil L01, and $l02$ represents equivalent inductance of the coil L02. Larger inductance $l_{eql}$ ensures conversion efficiency in the light-load state. When the BUCK circuit 017 works in the heavy-load state, the switch circuit 1 works, the coil L01 does not work, the coil L02 works, and the equivalent inductance connected to the BUCK circuit 017 is $l02$. In this case, smaller inductance ensures a response speed in the heavy-load state.

Example 2 shows a BOOST circuit. Refer to FIG. 18. The BOOST circuit 018 includes the switch circuit 0 and the switch circuit 1. The switch circuit 0 is coupled between the first end of the inductor (that is, the first end (1) of the coil L01) and the load (that is, connected to the load by using Vout). The switch circuit 1 is coupled between the undotted terminals (that is, a connection point between the second end (2) of L01 and the first end (1) of L02) of the coils L01 and L02 and the load. The second end (2) of L02 is connected to the power supply by using the port Vin. Therefore, when the BOOST circuit 018 works in the light-load state, the switch circuit 0 works, and equivalent inductance connected to the BOOST circuit 018 is:

$$l_{eq1} = l01 + l02 + 2k\sqrt{l01 * l02}$$ , where $l_{eql}$ represents the equivalent inductance of the inductor, $101$ represents the equivalent inductance of the coil L01, and $l02$ represents the equivalent inductance of the coil L02. Larger inductance $l_{eql}$ ensures the conversion efficiency in the light-load state. When the BOOST circuit 018 works in the heavy-load state, the switch circuit 1 works, the coil L01 does not work, the coil L02 works, and the equivalent inductance connected to the BOOST circuit 018 is $l02$. In this case, the smaller inductance ensures the response speed in the heavy-load state.

In the examples 1 and 2, the coils L01 and L02 may have same or different requirements on carrying currents. When the coils L01 and L02 have different requirements on carrying currents, conductors with different cross-sectional areas may be used. For example, in the heavy-load state, the coil L01 which a current does not pass through may use a conductor with a small cross-sectional area (a thin conductor). In the heavy-load state, the coil L02 which a large current passes through may use a conductor with a large cross-sectional area (a thick conductor), so that DCR of the inductor wound with the thick conductor is small, and efficiency in the heavy-load state is ensured. In this way, because DCR of the coil L02 greatly affects conversion efficiency of the voltage conversion circuit, L02 and L01 are respectively wound with the thick conductor and the thin conductor. This solution can further reduce costs and the volume of the inductor.

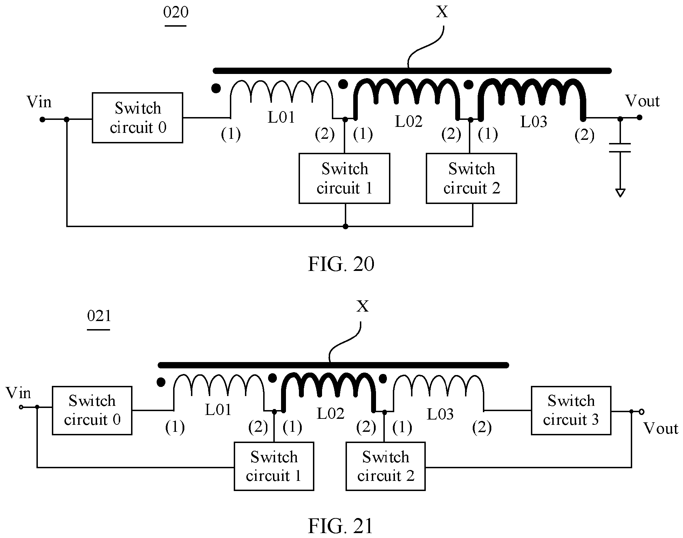

The following uses an example in which three coils are connected in series to form an inductor. Refer to FIG. 19. An inductor 019 includes the coil L01, the coil L02, the coil L03, and the magnetic core X. The coils L01, L02, and L03 are wound around the magnetic core X. A pair of undotted terminals of adjacent coils L01 and L02 are coupled (as shown in FIG. 19, the second end (2) of the coil L01 is coupled to the first end (1) of the coil L02). A pair of undotted terminals of adjacent coils L02 and L03 are coupled (as shown in FIG. 19, the second end (2) of the coil L02 is coupled to a first end (1) of the coil L03). Based on the foregoing inductor 019, in example 3, an embodiment of this application provides a BUCK circuit 020. Refer to FIG. 20. The BUCK circuit 020 includes the switch circuit 0, the switch circuit 1, and a switch circuit 2. The switch circuit 0 is coupled between the first end (that is, the first end (1) of the coil L01) of the inductor and the power supply (that is, Vin). The switch circuit 1 is coupled between the undotted terminals (that is, the connection point between the second end (2) of L01 and the first end (1) of L02) of the coils L01 and L02 and the power supply. The switch circuit 2 is coupled between undotted terminals (that is, a connection point between the second end (2) of L02 and a first end (1) of L03) of the coils L02 and L03 and the power supply. A second end (2) of L03 is connected to the load by using the port Vout. Based on the example 1, the example 3 provides the voltage conversion circuit that adapts to three different loads: the light-load state, a medium-load state, and the heavy-load state. When the BUCK circuit 020 works in the light-load state, the switch circuit 0 works, L01, L02, and L03 are all connected to the load, and total connected inductance is the largest, so that a requirement of high conversion efficiency in the light-load state can be met. When the BUCK circuit 020 works in the medium-load state, the switch circuit 1 works, and L02 and L03 are connected to the load, and the total connected inductance is medium, so that a performance requirement in the medium-load state can be met. When the BUCK circuit 020 works in the heavy-load state, the switch circuit 2 works, only the L03 is connected to the load, the total connected inductance is the smallest, and DCR is the smallest, so that a requirement of high efficiency and high transient performance can be met. Similarly, to reduce DCR in the heavy-load state as much as possible, L01, L02, and L03 may use coils whose inductance is gradually reduced, for example, cross-sectional areas of L01, L02, and L03 are gradually increased. Similar to the example 2, the inductor 019 formed by connecting three coils in series may also be applied to the BOOST circuit. Details are not described herein again.

Example 4 shows a BUCK-BOOST circuit. Refer to FIG. 21. The BUCK-BOOST circuit includes the switch circuit 0, the switch circuit 1, the switch circuit 2, and a switch circuit 3. The switch circuit 0 is coupled between the first end (that is, the first end (1) of the coil L01) of the inductor and the power supply (that is, Vin). The switch circuit 1 is coupled between the undotted terminals (that is, the connection point between the second end (2) of L01 and the first end (1) of L02) of the coils L01 and L02 and the power supply. The switch circuit 2 is coupled between the undotted terminals (that is, the connection point between the second end (2) of L02 and the first end (1) of L03) of the coils L02 and L03 and the load (that is, connected to the load by using Vout). The switch circuit 3 is coupled between the second end (2) of L03 and the load.

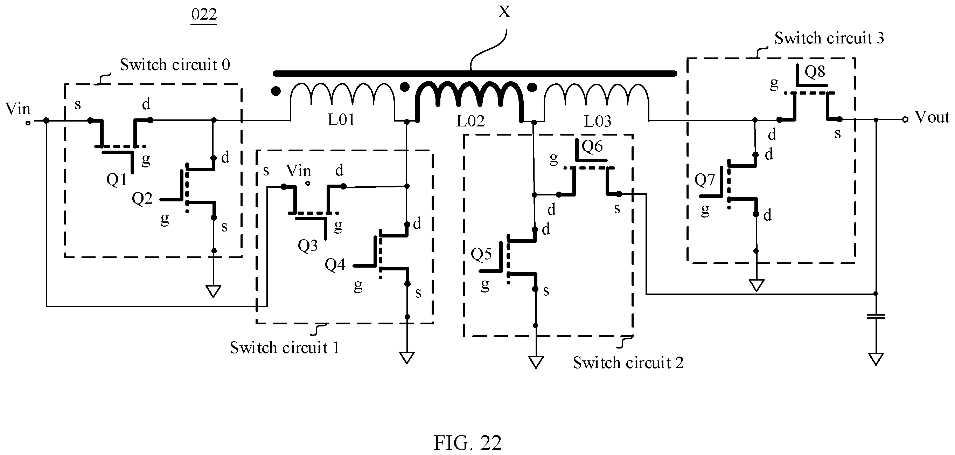

The switch circuits 0 and 3 do not work (refer to FIG. 22, the switch circuits 0 and 3 are in the off state, that is, switch transistors Q1, Q2, Q7, and Q8 in the switch circuits 0 and 3 are in an off state), and the switch circuits 1 and 2 work together in the heavy-load state of a BUCK or BOOST mode. In the BUCK mode, a PWM signal input to the switch circuit 1 is in a PWM state (that is, Q3 and Q4 of the switch circuit 1 are conducted or cut off under control of the PWM signal. Certainly, Q4 may also be replaced with a diode having a freewheeling function, for example, the diode D in FIG. 2), and the switch circuit 2 is in a pass-through state under control of the control signal (that is, Q6 is conducted and Q5 is cut off). In the BOOST mode, the switch circuit 1 is in the pass-through state (Q3 is conducted and Q4 is cut off) under the control of the control signal, and the PWM signal input into the switch circuit 2 is in the PWM state (that is, Q5 and Q6 in the switch circuit 2 are conducted or cut off under the control of the PWM signal; and certainly, Q6 may also be replaced with the diode having the freewheeling function, for example, the diode D in FIG. 4). In this case, only the coil L02 is connected to the load, so that inductance is small, and the high transient performance is ensured. Certainly, to reduce DCR in the heavy-load state as much as possible and improve efficiency of the circuit, the coil L02 may use a coil with smaller inductance than L01 and L02. For example, L02 may use a coil with a large cross-sectional area.

The switch circuits 0 and 2 do not work (refer to FIG. 22, the switch circuits 0 and 2 are in the off state, that is, the switch transistors Q1, Q2, Q5, and Q6 in the switch circuits 0 and 2 are cut off), and the switch circuits 1 and 3 work together in the light-load state of the BUCK or BOOST mode. In the BUCK mode, the PWM signal input to the switch circuit 1 is in the PWM state (that is, Q3 and Q4 in the switch circuit 1 are conducted or cut off under the control of the PWM signal; and certainly, Q4 may also be replaced with the diode having the freewheeling function, for example, the diode D in FIG. 2). The switch circuit 3 is in the pass-through state under the control of the control signal (that is, Q8 is conducted and Q7 is cut off). In this case, equivalent inductance of L02 and L03 is: $l_{eq3} = l02 + l03 + 2k\sqrt{l02 * l03}$. $l02$ represents the equivalent inductance of the coil L02, $l03$ represents equivalent inductance of the coil L03, and $k$ represents a coupling coefficient of L02 and L03.

In the BOOST mode, the switch circuit 1 is in the pass-through state (that is, Q3 is conducted and Q4 is cut off) under the control of the control signal, the PWM signal input to the switch circuit 3 is in the PWM state (that is, Q7 and Q8 of the switch circuit 3 are conducted or cut off under the control of the PWM signal. Certainly, Q8 may also be replaced with the diode having the freewheeling function, for example, the diode D in FIG. 4), and L02 and L03 are connected in series to the load. In this case, the equivalent inductance is:

$$l_{eq3} = l02 + l03 + 2k\sqrt{l02 * l03}$$

. $l02$ represents the equivalent inductance of the coil L02, $l03$ represents the equivalent inductance of the coil L03, and $k$ represents the coupling coefficient between L02 and L03.

The switch circuits 1 and 3 do not work (refer to FIG. 22, the switch circuits 1 and 3 are in the off state, that is, the switch transistors Q3, Q4, Q7, and Q8 in the switch circuits 1 and 3 are cut off), and the switch circuits 0 and 2 work together in the light-load state of the BUCK mode (the switch circuits 0 and 2 do not work together in the BOOST mode, because when voltage is boosted in the Boost mode, L01 may freewheel to the power supply Vin by using Q3 in the switch circuit 1). The switch circuit 2 is in the pass-through state under the control of the control signal (that is, Q6 is conducted and Q5 is cut off), and equivalent inductance connected to the load is:

$$l_{eq1} = l01 + l02 + 2k\sqrt{l01 * l02}$$

. $l_{eq1}$ represents the equivalent inductance of the inductor, $l01$ represents the equivalent inductance of the coil L01, $l02$ represents the equivalent inductance of the coil L02, and $k$ represents the coupling coefficient of L01 and L02.

The switch circuits 1 and 2 do not work (refer to FIG. 22, the switch circuits 1 and 2 are in the off state, that is, the switch transistors Q3, Q4, Q5, and Q6 in the switch circuits 1 and 2 are cut off), and the switch circuits 0 and 3 work together in the light-load state in the BUCK mode (the switch circuits 0 and 3 do not work together in the BOOST mode, because when the voltage is boosted in the Boost mode, L01 may freewheel to the power supply Vin by using Q3 in the switch circuit 1). The switch circuit 3 is in the pass-through state under the control of the control signal (that is, Q8 is conducted and Q7 is cut off), L01, L02, and L03 are connected in series to the load, and equivalent inductance generated when the three coils are connected in series is used. It can be learned that, in the voltage conversion circuit provided in the example 4 and in different load states, different equivalent inductance may be connected to the load by reusing the coil L02. Because the coil L02 and another coil share the magnetic core X, the equivalent inductance is increased. This reduces an overall volume of the inductor.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An inductor, comprising a magnetic core, and a first coil and a second coil that are wound around the magnetic core, wherein
the first coil and the second coil are connected in series between a first end and a second end of the inductor, and a pair of undotted terminals of the first coil and the second coil are coupled.

2. The inductor according to claim 1, wherein the magnetic core is a columnar magnetic core.

3. The inductor according to claim 1, wherein the magnetic core is in a closed ring shape.

4. The inductor of any one of claims 1 to 3, wherein one or more of parameters of the first coil and the second coil are different: inductance, impedance, a number of turns, or a cross-sectional area.

5. The inductor according to claim 1, wherein the first coil and the second coil are wound around the magnetic core in sequence.

6. The inductor according to claim 1, wherein the first coil and the second coil are wound around the magnetic core at the same time.

7. The inductor according to any one of claims 1 to 6, wherein the first coil and the second coil are a single-strand conductor or a Litz wire.

8. The inductor according to any one of claims 1 to 4, wherein the inductor is integrated with the coil by using a powdery magnetic core.

9. The inductor according to claim 8, wherein the first coil and the second coil form a laminated structure having a strip conductor that is wound around the magnetic core, and a thickness direction of the laminated structure is parallel to a direction of a magnetic loop of the magnetic core.

10. A voltage conversion circuit, comprising a switch circuit and the inductor according to any one of claims 1 to 9, wherein the switch circuit and at least one coil on the inductor form a voltage conversion loop, and the voltage conversion loop is coupled between a power supply and a load.

11. The voltage conversion circuit according to claim 10, wherein
the switch circuit is coupled between a first end of the inductor and the power supply, and a second end of the inductor is coupled to the load.

12. The voltage conversion circuit according to claim 10, wherein
the switch circuit is coupled between undotted terminals of any two adjacent coils and the power supply, and the second end of the inductor is coupled to the load.

13. The voltage conversion circuit according to claim 10, wherein
the second end of the inductor is coupled to the load by using the switch circuit, and the first end of the inductor is coupled to the power supply.

14. The voltage conversion circuit according to claim 10, wherein
the switch circuit is coupled between the undotted terminals of any two adjacent coils and the load, and the first end of the inductor is coupled to the power supply.

15. An electronic device, comprising the voltage conversion circuit according to any one of claims 10 to 14 and a control circuit, wherein the control circuit is configured to control the switch circuit.

FIG. 1

FIG. 2

03

FIG. 3

03a

FIG. 3a

FIG. 3b

FIG. 3c

04

41                    42

Vin +

V

Q

g

d

s

D

+

Vout

Co

−

**FIG. 4**

05

41                    42

Vin +

V

g  Q4

d      s

Q3

g

d

s

+

Vout

Co

−

**FIG. 5**

Vin

Vramp0

Vref

EA

CMP

PWM generator

g

g

Vout

**FIG. 6**

07

Vin

Switch circuit 0

L0

Switch circuit 1

L1

Vout

FIG. 7

08

Vin

Switch circuit 0

L0

L1

Switch circuit 1

Vout

FIG. 8

09

X

L01

L02

(1)          (2) (1)          (2)

FIG. 9

X1   101   X2   102

L01          L02

FIG. 10

011                   X

L01        L02

(1)      (2)      (2)        (1)

**FIG. 11**

012     (1)          (2)

L02

X

L01

(2)        (1)

**FIG. 12**

013

X

L01

L02

(1)            (1)

(2)

(2)

**FIG. 13**

FIG. 14

FIG. 15

FIG. 16

017

X

Vin — Switch circuit 0 — •⌢⌢⌢⌢• L01 ⌢⌢⌢⌢ L02 — Vout

(1)  (2) (1)  (3)

Switch circuit 1

FIG. 17

018

X

Vout — Switch circuit 0 — •⌢⌢⌢⌢• L01 ⌢⌢⌢⌢ L02 — Vin

(1)  (2) (1)  (2)

Switch circuit 1

FIG. 18

019

X

•⌢⌢⌢⌢• L01 ⌢⌢⌢⌢ L02 ⌢⌢⌢⌢ L03

(1)  (2) (1)  (2) (1)  (2)

FIG. 19

020

X

Vin — Switch circuit 0 — (1) L01 (2) (1) L02 (2) (1) L03 (2) — Vout

Switch circuit 1

Switch circuit 2

**FIG. 20**

021

X

Vin — Switch circuit 0 — (1) L01 (2) (1) L02 (2) (1) L03 (2) — Switch circuit 3 — Vout

Switch circuit 1

Switch circuit 2

**FIG. 21**

FIG. 22

EP 4 075 459 A1

## INTERNATIONAL SEARCH REPORT

International application No.

**PCT/CN2020/073342**

### A. CLASSIFICATION OF SUBJECT MATTER

H01F 27/28(2006.01)i

According to International Patent Classification (IPC) or to both national classification and IPC

### B. FIELDS SEARCHED

Minimum documentation searched (classification system followed by classification symbols)

H01F

Documentation searched other than minimum documentation to the extent that such documents are included in the fields searched

Electronic data base consulted during the international search (name of data base and, where practicable, search terms used)

CNKI, CNPAT, WPI, EPODOC: 华为技术有限公司, 电感, 绕组, 线圈, 耦合, 松耦合, 紧耦合, 全耦合, 共磁, 串联, 异名端, 磁芯, 第一, 第二, DCR, 体积, 开关电路, 电子设备, 升压, 降压, 轻载, 重载, boost, buck, inductance, electronic, input, output, coil, magnetic core, coupling, common, series

### C. DOCUMENTS CONSIDERED TO BE RELEVANT

| Category* | Citation of document, with indication, where appropriate, of the relevant passages | Relevant to claim No. |
|---|---|---|
| X | CN 1591264 A (MAWIER INTERNATIONAL TRADE CO., LTD,) 09 March 2005 (2005-03-09) claims 14-20, description, page 1, paragraph 3, pages 4-8, figures 1A, 6A-6C, 15A, 15B | 1-15 |
| X | JP 2008159817 A (TDK CORPORATION) 10 July 2008 (2008-07-10) description, paragraphs 18-38, figures 3-7 | 1-10, 15 |
| A | CN 109215974 A (INFINEON TECHNOLOGIES AUSTRIA AG) 15 January 2019 (2019-01-15) entire document | 1-15 |
| A | CN 103475248 A (HUAWEI TECHNOLOGIES CO., LTD.) 25 December 2013 (2013-12-25) entire document | 1-15 |
| A | CN 103260293 A (NIKO SEMICONDUCTOR CO., LTD.) 21 August 2013 (2013-08-21) entire document | 1-15 |
| A | JP 2013214633 A (NTT DATA INTELLILINK CORP.) 17 October 2013 (2013-10-17) entire document | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 September 2020** | **21 October 2020** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/073342**

| Patent document cited in search report | | | Publication date (day/month/year) | Patent family member(s) | | | Publication date (day/month/year) |
|---|---|---|---|---|---|---|---|
| CN | 1591264 | A | 09 March 2005 | US | 7760525 | B2 | 20 July 2010 |
| | | | | EP | 2254226 | A1 | 24 November 2010 |
| | | | | DE | 602004030192 | D1 | 05 January 2011 |
| | | | | EP | 1508958 | B1 | 24 November 2010 |
| | | | | TW | 200517801 | A | 01 June 2005 |
| | | | | TW | I361342 | B | 01 April 2012 |
| | | | | JP | 2005143284 | A | 02 June 2005 |
| | | | | EP | 2254226 | B1 | 04 April 2018 |
| | | | | CN | 1591265 | A | 09 March 2005 |
| | | | | US | 2005040796 | A1 | 24 February 2005 |
| | | | | CN | 1591265 | B | 22 September 2010 |
| | | | | EP | 1508959 | A3 | 18 July 2007 |
| | | | | JP | 2006101697 | A | 13 April 2006 |
| | | | | TW | I363263 | B | 01 May 2012 |
| | | | | EP | 1508958 | A3 | 18 July 2007 |
| | | | | CN | 100504708 | C | 24 June 2009 |
| | | | | EP | 1508959 | A2 | 23 February 2005 |
| | | | | EP | 1508958 | A2 | 23 February 2005 |
| | | | | JP | 4435731 | B2 | 24 March 2010 |
| | | | | TW | 200517802 | A | 01 June 2005 |
| | | | | JP | 4435647 | B2 | 24 March 2010 |
| | | | | CN | 1612457 | A | 04 May 2005 |
| | | | | JP | 4527470 | B2 | 18 August 2010 |
| | | | | US | 8299763 | B2 | 30 October 2012 |
| | | | | US | 7872454 | B2 | 18 January 2011 |
| | | | | EP | 1508956 | A3 | 08 November 2006 |
| | | | | EP | 1508956 | A2 | 23 February 2005 |
| | | | | US | 2005040800 | A1 | 24 February 2005 |
| | | | | CN | 100574070 | C | 23 December 2009 |
| | | | | JP | 2005168277 | A | 23 June 2005 |
| | | | | US | 2010277141 | A1 | 04 November 2010 |
| JP | 2008159817 | A | 10 July 2008 | None | | | |
| CN | 109215974 | A | 15 January 2019 | US | 10403428 | B2 | 03 September 2019 |
| | | | | EP | 3425650 | A1 | 09 January 2019 |
| | | | | US | 2019013140 | A1 | 10 January 2019 |
| | | | | KR | 20190004669 | A | 14 January 2019 |
| CN | 103475248 | A | 25 December 2013 | JP | 6333362 | B2 | 30 May 2018 |
| | | | | WO | 2015027693 | A1 | 05 March 2015 |
| | | | | EP | 2869452 | A4 | 20 January 2016 |
| | | | | JP | 2016518809 | A | 23 June 2016 |
| | | | | CN | 103475248 | B | 07 December 2016 |
| | | | | EP | 2869452 | A1 | 06 May 2015 |
| | | | | US | 2015062984 | A1 | 05 March 2015 |
| | | | | US | 9787217 | B2 | 10 October 2017 |
| CN | 103260293 | A | 21 August 2013 | None | | | |
| JP | 2013214633 | A | 17 October 2013 | None | | | |

Form PCT/ISA/210 (patent family annex) (January 2015)